# EUROPEAN PATENT SPECIFICATION

(11) **EP 2 312 844 B1**
(45) Date of publication and mention of the grant of the patent: **03.09.2014**
(21) Application number: 08808779.6
(22) Date of filing: 07.08.2008
(51) Int. Cl.: H04N 7/173, H04H 20/93, H04H 60/82, H04N 5/445, H04N 21/2343, H04N 21/258, H04N 21/235, H04N 21/435, H04N 21/488, H04N 21/658, H04N 21/858

(54) **DATA BROADCAST SYSTEM, DATA BROADCAST SERVER AND DATA BROADCAST PROGRAM**
DATENAUSSTRAHLUNGSSYSTEM, DATENAUSSTRAHLUNGSSERVER UND DATENAUSSTRAHLUNGSPROGRAMM
SYSTÈME DE DIFFUSION DE DONNÉES, SERVEUR DE DIFFUSION DE DONNÉES ET PROGRAMME DE DIFFUSION DE DONNÉES

(43) Date of publication of application: 20.04.2011
(73) Proprietor: Fujitsu Limited, Kawasaki-shi, Kanagawa 211-8588 (JP)
(72) Inventor: OHBITSU, Toshiro, Kawasaki-shi Kanagawa 211-8588 (JP)
(74) Representative: Lewin, David Nicholas
(86) International application number: PCT/JP2008/064218
(87) International publication number: WO 2010/016128

(56) References cited:
- EP-A1- 1 286 541
- WO-A1-01/35658
- JP-A- 2003 186 851
- JP-A- 2004 086 249
- JP-A- 2004 312 595
- JP-A- 2006 345 214
- JP-A- 2007 158 414
- US-A1- 2002 056 100
- US-A1- 2004 123 332
- US-B1- 6 487 543

## Description

### Technical Field

The present case relates to a data broadcasting system, a data broadcasting server and a data broadcasting program.

### Background Art

In the digital terrestrial television broadcasting that transmits digitized image and sound signals by ground waves, a broadcast signal bandwidth is split into thirteen segments and used. By using one segment among them, broadcasting called one-segment broadcasting mainly for mobile units has been put into practice. A receiving function of the one-segment broadcasting is installed into not only dedicated television receivers but also information devices such as personal computers and portable telephones.

In the one-segment broadcasting, other than images and sounds as ordinary TV programs supplied through the ground waves from broadcasting stations, data broadcasting that supplies information via a network such as the Internet is implemented as a supplementary service. In the data broadcasting, link information is included in the information transmitted through the ground waves from the broadcasting stations. This link information indicates a content and are in the data broadcasting server which may be accessed through the Internet. A user device that functions as a television receiver on the user side acquires the link information from the received ground waves, obtains the content according to the link information from a data broadcasting server, and displays the content. In the one-segment broadcasting, it is possible to provide on-demand information according to a user's operation, beyond constraints of programs provided based on broadcast waves. The content provided by the data broadcasting server includes not only texts but also images and sounds. At the time of replaying the images and sounds, the user device receives the data from the data broadcasting server, decodes the data by using a decoder supporting this data, and displays the data.

The data broadcasting using a network connection may provide the user device with various information, beyond constraints of the transmission by the broadcast waves, but on the other hand, a case in which the display performance of the user device is unable to support the various information may take place. There is a possibility that when the user device selects reception of a content exceeding its own display ability, the content may not be replayed and further, troubles may also occur in ordinary functions. Therefore, it is desired to limit the information transmitted to the user device.

As a limitation to the transmission of information, there is known, for example, a system that applies DRM (Digital Rights Management) to the content to be supplied from a server to the user device and thereby limits the replay of the content (for example, see Patent Citation 1). In this system, the user device transmits a digital signature to the server, and the server inserts the signature into a DRM message in the content.

Also, there is known a system that has a user device in which an application is executed and an image server which receives a content acquisition request from this user device (for example, see Patent Citation 2). The user device of this system writes application information indicating the type of the application activated at the time of acquisition of the content into the content acquisition request and sends the request to the server, and the server transmits the content according to the application information.
Patent Citation 1: Japanese Laid-open Patent Publication No. 2004-342080
Patent Citation 2: Japanese Laid-open Patent Publication No. 2006-163780

EP1286541 (A1) discloses a method to easily obtain information related to the broadcast information or recorded information from a server, in which, in a system in which a viewer apparatus and a content providing server for providing content information related to video or voice are connected via a network, the viewer apparatus obtains related information necessary for obtaining the content information; sends the related information to the content providing server so as to request the content providing server to send the content information; and obtains the content information sent from the content providing server.

US6487543 (B1) discloses a terminal device having means for acquiring data from broadcasting, data from the network, and data from the package. The terminal device further has a means for displaying the data acquired by the above-mentioned means together or a means for displaying information included in the data as a link.

US2002056100 (A1) discloses a broadband data broadcast system that allows rich multimedia content to be delivered to a plurality of subscribers is disclosed. The broadband data broadcast system operates by multiplexing a plurality of rich multimedia digital information streams together at a centralized data broadcast center. The data broadcast center then broadcasts the multiplexed digital information stream on a broadcast medium such as satellite broadcasts, radio frequency broadcasts, or digital television broadcasts. A large number of receiver systems receive the broadcast signal and demodulate the broadcast signal to retrieve the multiplexed digital stream. The receiver system extracts a subset of digital information streams that the particular receiver system's owner has designated are of interest.

WO0135658 (A1) discloses a system for providing a broadcast program and related contents thereof at the same time, and more particularly, to a broadcast portal service system for synchronizing program streaming contents provided from a plurality of broadcast sources with non-streaming contents related to various programs provided from a plurality of non-streaming sources through wired/wireless computer networks such as the Internet, so as to provide real-time interactive broadcasts to users.

US 2004/123332 (A1) discloses a television broadcaster (which could be a satellite, cable or terrestrial, digital broadcaster) that broadcasts from their broadcast head end via radio waves or a cable, as appropriate, linear digital television content to users' remote terminal digital television receivers or set top boxes. As well as broadcasting the linear television content, the broadcast head end also broadcasts as a continuous loop or carousel, software such as operating system software, application program interface software and television interactivity enabling software, which can be used by the set top boxes. This software is transmitted alongside and/or within the linear television signal, and uses the redundant space that is present in the digital television signal.

### Disclosure of the Invention

However, in the system using DRM, the DRM message is inserted into the content, and the content needs to be revised for every user device to change the signature in the DRM message. This makes the processing on the transmitting side complicated. Also, it is difficult to apply the system in which the image server receives the application information to, for example, broadcasting in which information that can be transmitted from the user device is limited, such as the one-segment broadcasting.

In view of the foregoing circumstances, it is an object of the disclosure of the present case to provide a data broadcasting system, a data broadcasting server and a data broadcasting program, in which by transmission of limited information from a user device, reception of a content exceeding the own display performance may be avoided.

The invention proposes a data broad-casting server according to claim 1 and a program according to claim 4.

There is disclosed a data broadcasting system which includes:
a user device that includes:
   a broadcast receiving section that receives a broadcast from a broadcasting station;
   a display section that displays a content which is received from the broadcasting station and which includes primary link information indicating secondary link information indicating other content on a network;
   a user operation section that designates the primary link information of the content displayed in the display section, according to a user's operation; and
   a network connection section that is connected to the network, receives and transmits information via the network, and requests, in response to the primary link information being designated by the user operation section, to transmit the secondary link information indicated by the designated primary link information, accompanied by the user device's own model information; and a server that includes:
      a performance storage section that stores correspondence information in which model information and content display performance of a model included in the model information are associated with each other;
      a content performance determination section that refers to the correspondence information upon receipt of a request to transmit sent from the user device to transmit the secondary link information including the model information of the user device, obtains content display performance of the user device, and determines whether the content indicated by the secondary link information requested by the request to transmit from the user device exceeds the content display performance of the user device, and
   a secondary link information transmission section that adds, to the secondary link information requested by the request to transmit from the user device, information indicating whether the content indicated by the secondary link information requested by the request to transmit from the user device exceeds the content display performance of the user device, and transmits the secondary link information to the user device.

A data broadcasting server transmits, in response to designation of primary link information included in a content received from a broadcasting station, to a user device which requests a transmission of secondary link information indicated by the designated primary link information, accompanied by the user device's own model information, the secondary link information, the server including:
a performance storage section that stores correspondence information in which model information and content display performance of a model included in the model information are associated with each other;
a content performance determination section that refers to the correspondence information upon receipt of a request to transmit sent from the user device to transmit the secondary link information including the model information of the user device, obtains content display performance of the user device, and determines whether the content indicated by the secondary link information requested by the request to transmit from the user device exceeds the content display performance of the user device; and
a secondary link information transmission section that adds, to the secondary link information requested by the request to transmit from the user device, information indicating whether the content indicated by the secondary link information requested by the request to transmit from the user device exceeds the content display performance of the user device, and transmits the secondary link information to the user device.

A data broadcasting program is incorporated into a computer, and causes the computer to function as a data broadcasting server that transmits, in response to designation of primary link information included in a content received from a broadcasting station, to a user device that requests to a transmission of secondary link information indicated by the designated primary link information, accompanied by the user device's own model information, the secondary link information, the program implementing on the computer:
a content performance determination section that refers to, upon receipt of a request to transmit sent from the user device to transmit the secondary link information including the model information of the user device, correspondence information of a performance storage section storing the correspondence information in which model information and content display performance of a model included in the model information are associated with each other, obtains content display performance of the user device, and determines whether or not the content indicated by the secondary link information requested by the request to transmit from the user device exceeds the content display performance of the user device; and
a secondary link information transmission section that adds, to the secondary link information requested by the request to transmit from the user device, information indicating whether or not the content indicated by the secondary link information requested by the request to transmit from the user device exceeds the content display performance of the user device, and transmits the secondary link information to the user device.

The user device sends a request to transmit the secondary link information, accompanied by its own model information, and the data broadcasting server adds the information indicating whether the content display performance of the user device is exceeded to the secondary link information, and transmits the secondary link information. Therefore, the user device may avoid reception of a content exceeding its own display performance. Also, for the transmission of the model information, for example, in the one-segment broadcasting, an existing user agent of transmitting model information of a user device may be utilized.

### Brief Description of Drawings

FIG. 1 is a diagram that illustrates one specific embodiment of the data broadcasting system.
FIG. 2 is a block diagram that illustrates a hardware configuration of the user device illustrated in FIG. 1.
FIG. 3 is a block diagram that illustrates a hardware configuration of the server illustrated in FIG. 1.
FIG. 4 is a block diagram that illustrates a configuration of main functional blocks of the user device illustrated in FIG. 1.
FIG. 5 is a block diagram that illustrates a configuration of main functional blocks of the data broadcasting server illustrated in FIG. 1.
FIG. 6 is a diagram that illustrates the configuration of a data broadcasting program.
FIG. 7 is a diagram that illustrates a state in which the broadcast content received from the broadcasting station is displayed on the display screen of the image display unit.
FIG. 8 is a diagram that illustrates a data structure of the user agent.
FIG. 9 is a diagram that illustrates the correspondence information stored in the performance storage section.
FIG. 10 is a flow chart that illustrates processing in the user device illustrated in FIG. 4 and the data broadcasting server illustrated in FIG. 5.
FIG. 11 is a diagram that illustrates a state in which the submenu is displayed in one user device.
FIG. 12 is a diagram that illustrates a state in which the submenu received from the server is displayed on the display screen of the image display unit of the user device 3 that is the model different from that in FIG. 11.
FIG. 13 is a diagram that illustrates a state in which a message saying that the decoder is being transmitted from the server is displayed on the display screen of the user device.
FIG. 14 is a diagram that illustrates a state in which the content that has been transmitted from the server is displayed on the display screen of the user device.

### Best Mode for Carrying Out the Invention

Specific embodiments of the data broadcasting system, the data broadcasting server and the data broadcasting program disclosed in the present case will be described bellow.

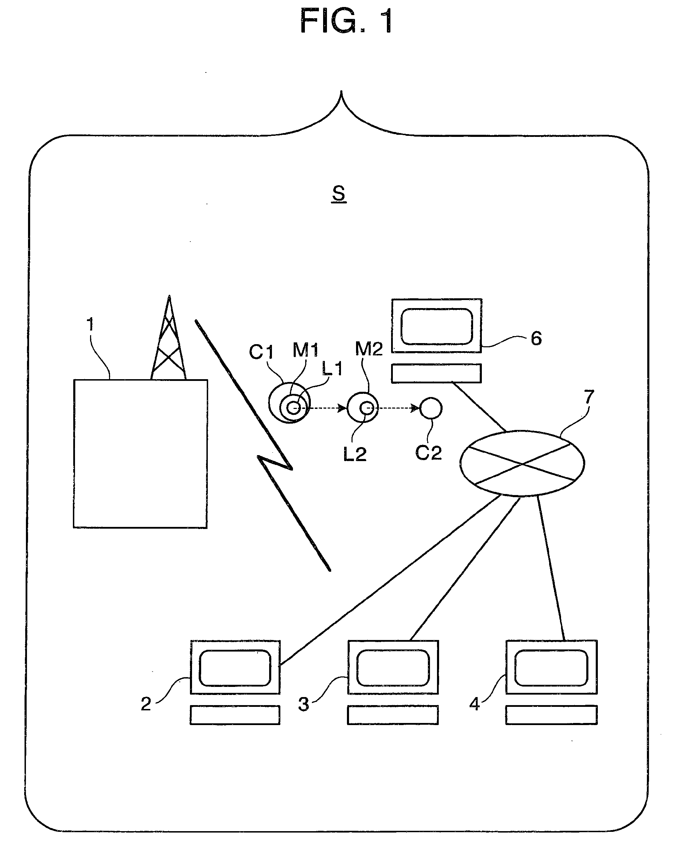

FIG. 1 is a diagram that illustrates one specific embodiment of the data broadcasting system.

A data broadcasting system S illustrated in FIG. 1 includes: a broadcasting station 1 that transmits data of one-segment broadcasting by ground waves; user devices 2, 3 and 4 that receive broadcasts from the broadcasting station; and a data broadcasting server 6 (hereinafter merely referred to as the server 6) that performs two-way communication with the user devices 2, 3 and 4 and supplies information on data broadcasting. The user devices 2, 3 and 4 and the server 6 are connected by a network 7. The network 7 is, for example, the Internet.

The broadcasting station 1 wirelessly transmits the data of the one-segment broadcasting through broadcast waves (ground waves). Each of the user devices 2, 3 and 4 receives the data that has been transmitted from the broadcasting station 1. In a broadcast content C1 which is the data transmitted from the broadcasting station 1, images and sounds (hereinafter, the "images and sounds" are simply referred to as the "image") in normal television broadcasts are included, and the user devices 2, 3 and 4 receive, process, and thereby display the data that has been transmitted from the broadcasting station 1.

Here, a summary of the flow of the data among the broadcasting station 1, the user devices 2, 3 and 4, and the server 6 will be described.

The user devices 2, 3 and 4 also receive and display a content C2 transmitted through the network 7 as well as the broadcast content C1. In the present embodiment, the server 6 stores the content C2, and transmits the content C2 to the user devices 2, 3 and 4 by way of the network 7 in response to a request from the user devices 2, 3 and 4. The user devices 2, 3 and 4 request the server 6 to transmit the content according to link information L2 that indicates the content C2 on the network. This link information L2 is supplied from the server 6 as submenu data M2. Further, the submenu data M2 that includes this link information L2 also is transmitted in response to a request from the user devices 2, 3 and 4. Based on another link information L1 that indicates the menu data including the link information L2, the user devices 2, 3 and 4 request the server 6 to transmit the submenu data M2. This another link information L1 is included in the broadcast content C1 that has been broadcasted from the broadcasting station 1 in form of the menu data M1. The link information L1 included in the broadcast content C1 transmitted from the broadcasting station 1 will be referred to as primary link information, and the link information L2 transmitted from the server 6 will be referred to as secondary link information.

In other words, the primary link information L1 is included in the broadcast content C1 broadcasted from the broadcasting station 1, and the primary link information L1 indicates the secondary link information L2. The secondary link information L2 transmitted from the server 6 indicates the content C2 stored in the server. The menu data M2 that includes the secondary link information L2 will be referred to as submenu data.

Unlike the broadcast content C1, the content C2 which may be transmitted via the network 7 is more than one. The link information is layered to indicate multiple contents efficiently. For example, plural pieces of primary link information L1 that indicate plural pieces of submenu data M2 are included in the menu data M1 broadcasted from the broadcasting station 1, and plural pieces of secondary link information L2 are included in the respective plural pieces of submenu data M2. In FIG. 1, each of the primary link information L1 and the secondary link information L2 is illustrated as one piece of information so that the indicated relationships (illustrated in broken lines) are easy to see.

The menu data M1 and the submenu data M2 including the link information L1 and L2 are described in BML (broadcast markup language) defined by Japan ARIB (ARIB: Association of Radio Industries and Businesses), and described as a menu representing a list of selectable contents. BML is a markup language defined based on XHTML (extensible hypertext markup language). The link information L1 and L2 each have a URL (uniform resource locator).

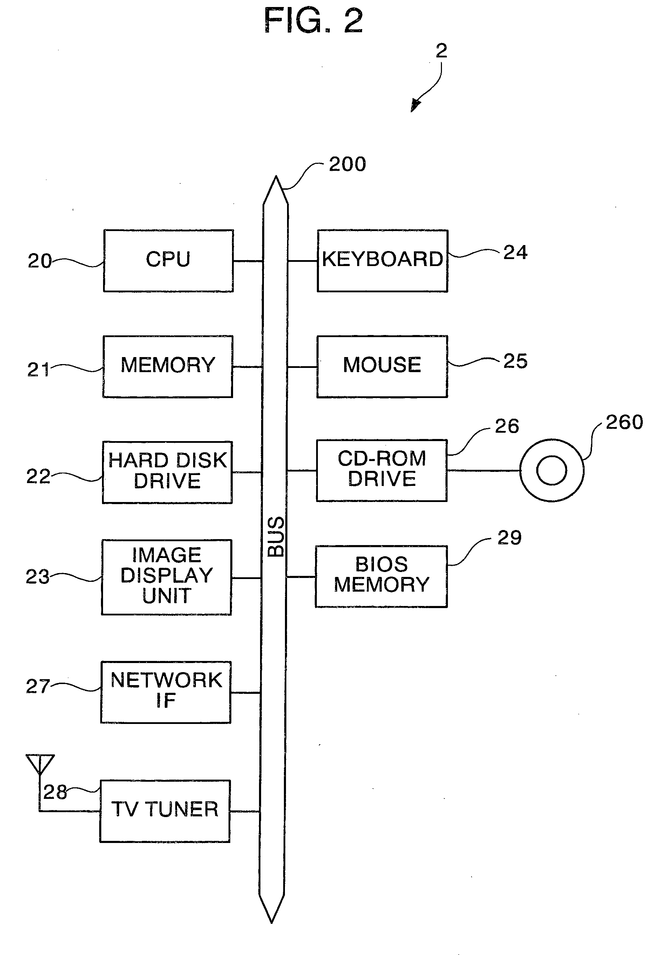

FIG. 2 is a block diagram that illustrates a hardware configuration of the user device illustrated in FIG. 1.

The user devices 2, 3 and 4 are personal computers, and mutually differ in terms of performance such as the processing speeds of the components and the data storage capacity, but they have basic hardware configurations in common. Therefore, the difference in the performance will be described later, and the basic hardware configuration will be described by illustrating the user device 2 as a representative.

The user device 2 includes a CPU 20, a memory 21, a hard disk drive 22, an image display unit 23, a keyboard 24, a mouse 25, a CD-ROM drive 26, a network IF 27, a TV tuner 28 and a BIOS memory 29. These are interconnected through a bus 200.

The CPU 20 controls each part in the user device 2 by executing a program, and processes data output from each part. The memory 21 temporarily stores the program executed by the CPU 20 and data. Various types of program and data are stored in the hard disk drive 22. The image display unit 23 displays images on a display screen. The keyboard 24 inputs an instruction and character information according to a user's operation, and the mouse 25 designates an arbitrary position on the display screen of the image display unit 23 according to the user's operation and thereby inputs an instruction corresponding to the position. The CD-ROM drive 26 is loaded with a CD-ROM 260 serving as a recording medium and accesses the CD-ROM 260. The network IF 27 uses, for example, a communication protocol represented by IP, thereby connecting to the server 6 through the network 7. The TV tuner 28 receives a broadcast wave transmitted from the broadcasting station. To be more specific, the TV tuner 28 selects and receives a radio wave in a frequency band according to each channel, performs OFDM (orthogonal frequency division multiplexing) demodulation, and outputs the demodulated signal in form of TS (Transport Stream). In the BIOS memory 29, a BIOS (basic input/output system) program that is a basic input-output program for causing each part in the user device 2 to operate is stored. Further, in the BIOS memory 29, data to identify the manufacturer of the user device, the model of the user device, the user device itself is stored at the time of manufacturing the user device. The BIOS memory 29 is, for example, a non-volatile memory represented by a flash memory.

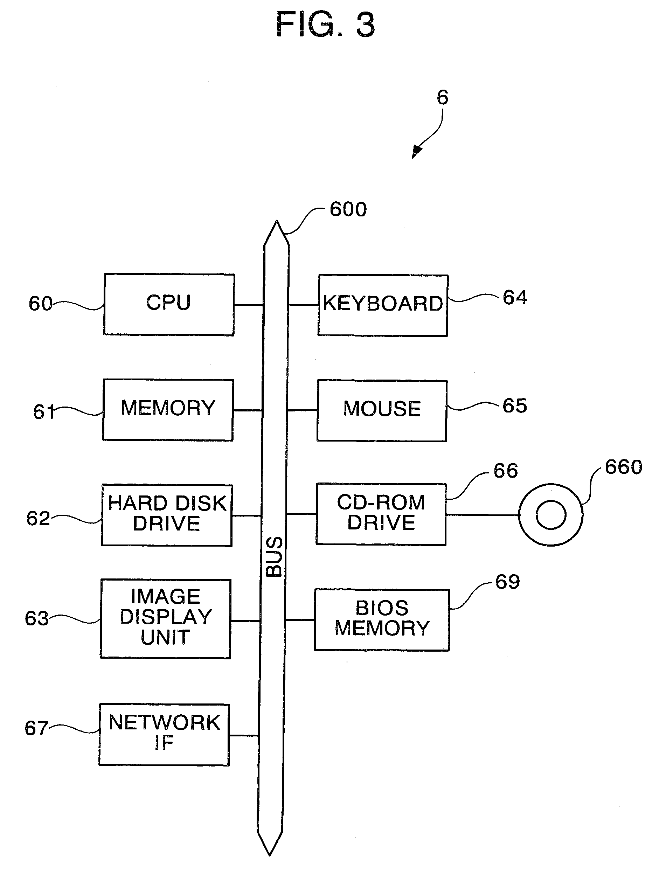

FIG. 3 is a block diagram that illustrates a hardware configuration of the server illustrated in FIG. 1.

The server 6 illustrated in FIG. 3 includes a CPU 60, a memory 61, a hard disk drive 62, an image display unit 63, a keyboard 64, a mouse 65, a CD-ROM drive 66, a network IF 67 and a BIOS memory 69. These are interconnected through a bus 600. The server 6 is a computer that has a basic structure in common with the user device illustrated in FIG. 2 except that the TV tuner is not provided and thus, further detailed description will be omitted. However, the performance of each part is higher than that of the user device 2, because the server 6 communicates with the plural user devices and supplies the contents simultaneously.

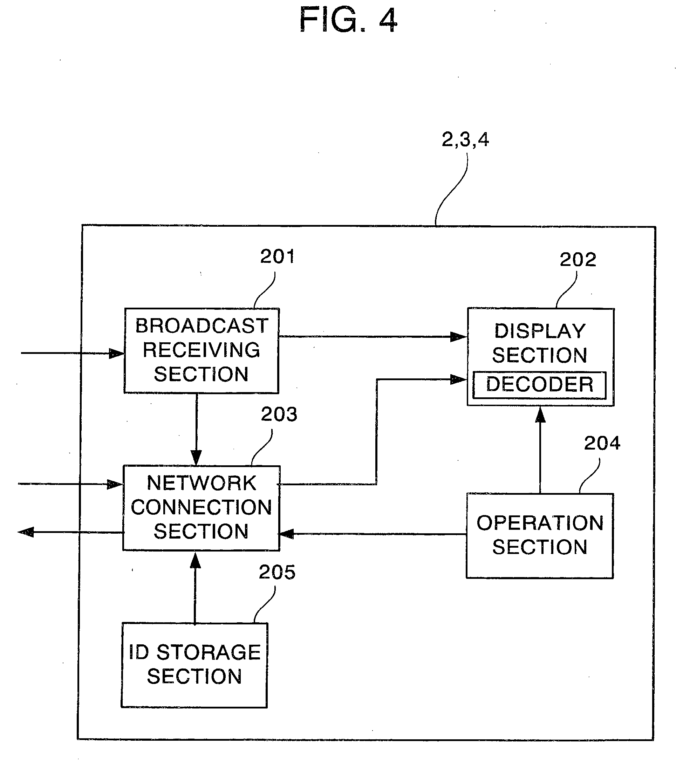

FIG. 4 is a block diagram that illustrates a configuration of main functional blocks of the user device illustrated in FIG. 1.

The user device 2 includes a broadcast receiving section 201, a display section 202, a user operation section 204, a network connection section 203, and an ID storage section 205. These functional blocks function by execution of programs stored in the hard disk drive 22 and the CD-ROM 260 by the CPU 20. The remaining user devices 3 and 4 also have functional blocks similar to those of the user device 2. The combination of the TV tuner 28 and the CPU 20 illustrated in FIG. 2 corresponds to the broadcast receiving section 201, and the combination of the image display unit 23 and the CPU 20 illustrated in FIG. 2 corresponds to the display section 202. Further, the combination of the keyboard 24, the mouse 25 and the CPU 20 illustrated in FIG. 2 corresponds to the user operation section 204, and the combination of the network IF 27 and the CPU 20 illustrated in FIG. 2 corresponds to the network connection section 203. Furthermore, the BIOS memory 29 illustrated in FIG. 2 corresponds to the ID storage section 205.

The broadcast receiving section 201 receives a broadcast from the broadcasting station 1. To be more specific, the broadcast receiving section 201 receives and demodulates a broadcast wave corresponding to a channel, and outputs the broadcast content C1 carried by the broadcast wave. The broadcast content C1 (see FIG. 1) transmitted from the broadcasting station 1 includes image data and the menu data M1 to start receiving the content of the data broadcasting.

The display section 202 displays the broadcast content C1 sent from the broadcasting station 1 and received by the broadcast receiving section 201. To be more specific, the display section 202 decodes the data of the image taken out by the broadcast receiving section 201 and displays the image on the display screen of the image display unit 23, and also displays the menu data M1 for starting the data broadcasting on the display screen of the image display unit 23. The display section 202 displays the menu data M1 in response to data-broadcasting starting operation of the user operation section 204. Further, the display section 202 also displays the menu data M2 including the secondary link information in response to the reception in the network connection section 203, and the content C2.

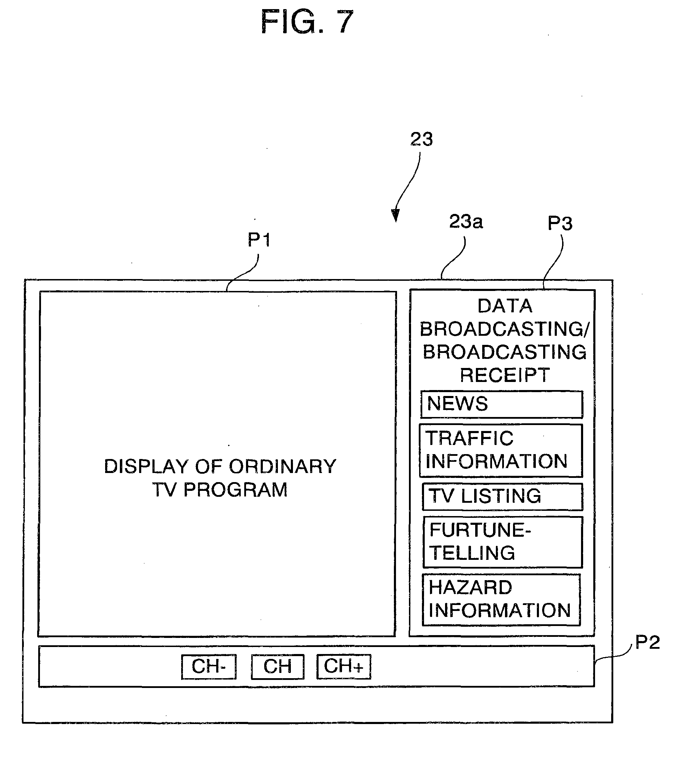

FIG. 7 is a diagram that illustrates a state in which the broadcast content received from the broadcasting station is displayed on the display screen of the image display unit.

An image of the broadcast content C1 received from the broadcasting station is displayed in an upper left area P1 of a display screen 23a of the image display unit 23. Also, in a lower area P2, channel buttons to select broadcast waves of other channels are displayed. Further, in an upper right area P3, the menu data M1 is displayed. The menu data M1 is described in BML, and in each of the plural pieces of primary link information included in the menu data M1, an item name displayed as a select button, a URL corresponding to the item name, and the display attribute of the select button are included. The URL of the primary link information indicates the submenu data M2 including the secondary link information stored in the server 6. The display section 202 functions as a BML browser, interprets the menu data M1 described in BML, and displays the menu data M1 in the upper right area P3. In the area P3, "news", "traffic information", "TV listing", "fortune-telling" and "hazard information", which are item names included in the respective pieces of primary link information, are displayed as the select buttons.

According to the operation of the user, the user operation section 204 illustrated in FIG. 4 designates any of the pieces of primary link information included in the menu data M1 of the broadcast content C1 More specifically, when any of the select buttons displayed in the upper right area P3 on the display screen 23a of the display section 202 is selected according to the operation of the keyboard 24 or the mouse 25 by the user, the user operation section 204 designates the URL corresponding to the primary link information of the selected button. The user operation section 204 performs designation of the secondary link information in a manner similar to that of the primary link.

The network connection section 203 is connected to the network 7, and receives and transmits data through the network 7. In response to the primary link information being designated by the user operation section 204, the network connection section 203 requests the transmission of the secondary link information indicated by the URL of the designated primary link information. To be more specific, the network connection section 203 requests the server indicated by the designated URL to transmit the submenu data M2 including the secondary link information. The request of the transmission is performed by sending a transmit command to the server 6. This transmit command includes a user agent that inserts the own information. Further, in response to the secondary link information being designated by the user operation section 204, the network connection section 203 requests the transmission of the content indicated by the URL of the designated secondary link information, and receives the transmitted content.

In the ID storage section 205, a manufacturer ID, a model ID and a serial number that represent the manufacturer of the user device, the model of the user device and the user device itself, respectively, are stored. When requesting the server to perform the transmission, the network connection section 203 inserts the data read from the ID storage section 205 into the user agent of a transmission request command. By doing so, the network connection section 203 provides a request to transmit the data, accompanied by the own model information.

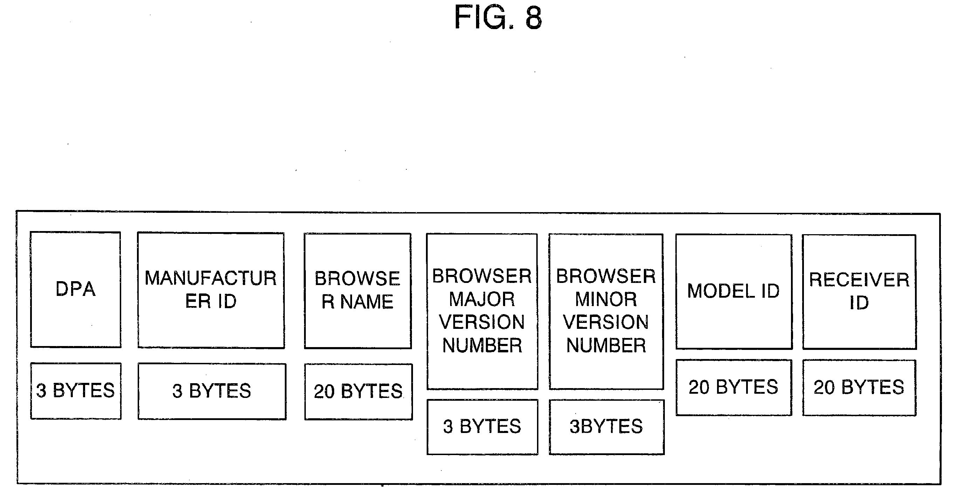

FIG. 8 is a diagram that illustrates a data structure of the user agent.

The user agent (User-Agent) inserted into the transmission request command is defined by ARIB TR-14 standard, and includes: characters of "DPA" (3 bytes), a manufacturer ID (3 bytes) that represents the manufacturer of the user device, a browser name (20 bytes) that represents the browser provided in the user device, a browser major version number (3 bytes), a browser miner version number (3 bytes), a model ID (20 bytes) that represents the model of the user device, and a receiver ID (20 bytes) to identify the user device itself. The network connection section 203 reads the manufacturer ID, the model ID and the serial number from the ID storage section 205, inserts them into the manufacturer ID, the model ID and the receiver ID of the user agent, respectively, and transmits the transmission request command into which this user agent is inserted.

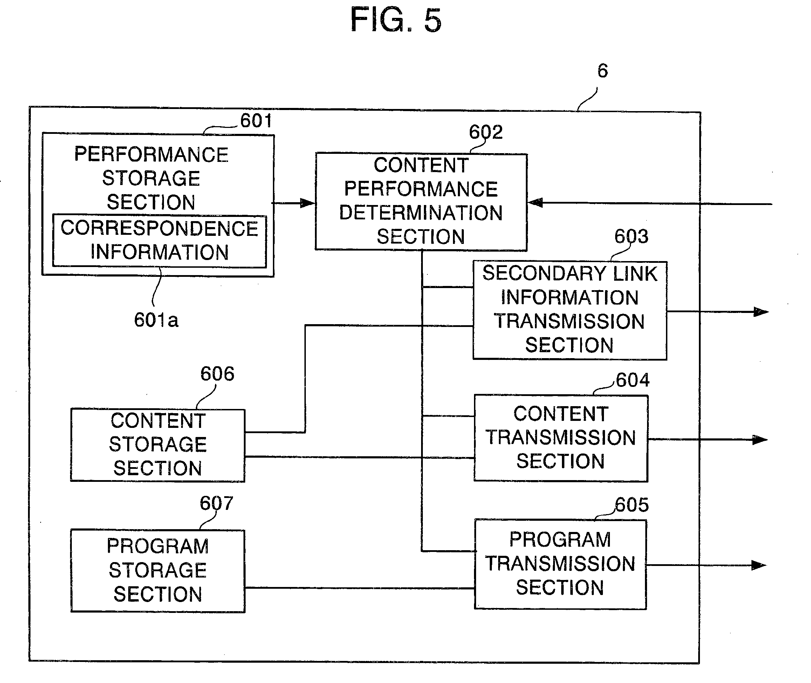

FIG. 5 is a block diagram that illustrates a configuration of main functional blocks of the data broadcasting server illustrated in FIG. 1.

The server 6 includes a performance storage section 601, a content performance determination section 602, a secondary link information transmission section 603, a content transmission section 604, a program transmission section 605, a content storage section 606, and a program storage section 607.

Each of the memory 61 and the hard disk drive 62 illustrated in FIG. 3 corresponds to the performance storage section 601, and the combination of the CPU 60 and the network IF 67 illustrated in FIG. 3 corresponds to the secondary link information transmission section 603. Further, each of the memory 61 and the hard disk drive 62 corresponds to the content storage section 606, and each of the memory 61 and the hard disk drive 62 corresponds to the program storage section 607. Furthermore, the combination of the CPU 60 and the network IF 67 illustrated in FIG. 3 corresponds to the content transmission section 604, and the combination of the CPU 60 and the network IF 67 illustrated in FIG. 3 corresponds to the program transmission section 605. Furthermore, the combination of the CPU 60 and the network IF 67 illustrated in FIG. 3 corresponds to the content performance determination section 602.

The performance storage section 601 stores correspondence information 601a in which the model information of the user device and the content display performance of the model are associated with each other. The user devices receiving the service of the data broadcasting vary by model in terms of the content display performance. The content display performance in the present embodiment is represented by the type of the CPU, the capacity of the memory, and the presence or absence of the decoder.

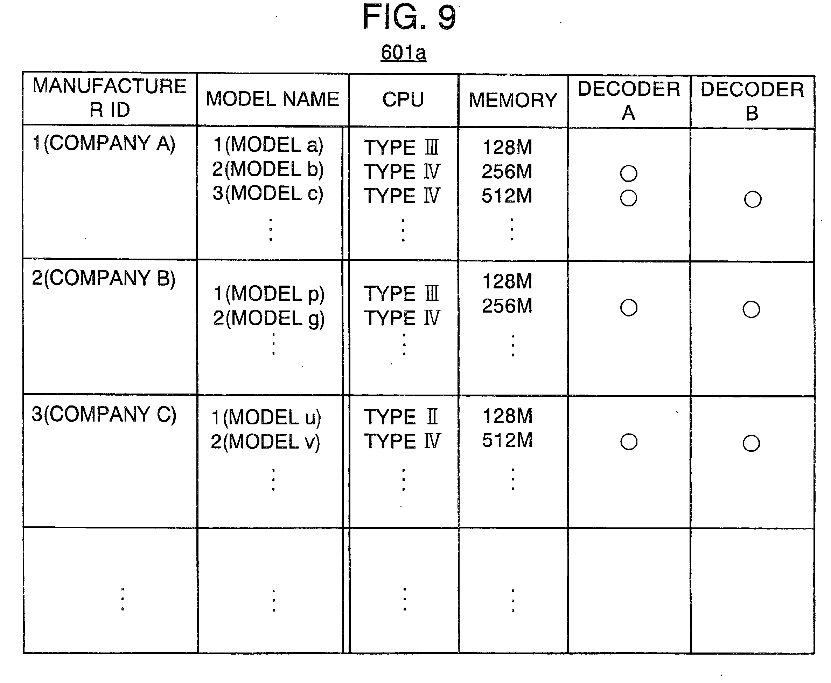

FIG. 9 is a diagram that illustrates the correspondence information stored in the performance storage section. In FIG. 9, the correspondence information 601a is illustrated in tabular form.

The correspondence information 601a has fields of the manufacturer ID, the model ID, the CPU, the memory, a decoder A and a decoder B. Among them, the combination of the manufacturer ID and the model ID represents the model information. Further, the CPU, the memory, the decoder A and the decoder B represent the content display performance. For example, in a case in which the value of the manufacturer ID is 1 and the value of the model ID is 1, a model "a" of a company A represents the user device, and this model is provided with a CPU of type III and a memory of 128 MB. Further, it is indicated that in the model "a" of the company A, neither the decoder A nor the decoder B (installed) serving as a processing program necessary for displaying a particular content is incorporated. Meanwhile, both the decoder A and the decoder B are installed in a model "c" of the company A. Addition and update are made in the correspondence information 601a in response to an announcement of a new-model user device by the manufacturer of the user device.

Upon receipt of the transmission request including the model information of the user device and transmitted from the user devices 2, 3 and 4, the content performance determination section 602 refers to the correspondence information 601a, and obtains the content display performance of the user devices 2, 3 and 4. Further, the content performance determination section 602 determines whether the content that indicates the secondary link information requested by the transmission request is a content that requires content display performance exceeding the content display performance of the user device. Furthermore, the content performance determination section 602 refers to the correspondence information 601a, and determines whether the content indicated by the secondary link information requested by the transmission request is a content that requires a processing program absent in the user device.

The secondary link information transmission section 603 transmits the secondary link information for which the transmission request has been received from the user devices 2, 3 and 4, to the user device. To be more specific, the secondary link information transmission section 603 reads the submenu data M2 including the secondary link information from the content storage section 606, edits the submenu data M2 as necessary, and transmits the submenu data M2. The submenu data M2 is described in BML like the menu data M1, and the item name displayed as the select button, the URL corresponding to the item name, and the display attribute of the select button are included in each piece of the secondary link information possessed by the submenu data M2. The URL of the secondary link information indicates the content stored in the server 6. Based on the determination of the content performance determination section 602, the secondary link information transmission section 603 adds information that indicates whether the content indicated by the secondary link information requires performance exceeding the content display performance of the user device to this secondary link information. The addition of this information is performed by setting, to the display attribute of the select button, a "dark" attribute for displaying an item to be distinguished from other items.

In the content storage section 606, the content C2 supplied to the user device by the data broadcasting and the submenu data M2 are stored.

In the program storage section 607, the decoder, which is a processing program required when the user device displays the content, is stored. The decoder required for display is installed beforehand (preinstalled) in the user device of a particular model at the time of shipping after being manufactured. The installation status of the decoder for each model of the user device is in the correspondence information 601a (see FIG. 9).

The content transmission section 604 reads, from the content storage section 606, the content requested by the transmission request from the network connection section 203 of the user devices 2, 3 and 4, and transmits, via the network 7, the read content to the user device that has sent the request.

When it is determined by the content performance determination section 602 that the content is a content that requires a decoder absent in the user device, the program transmission section 605 transmits the decoder to the user device.

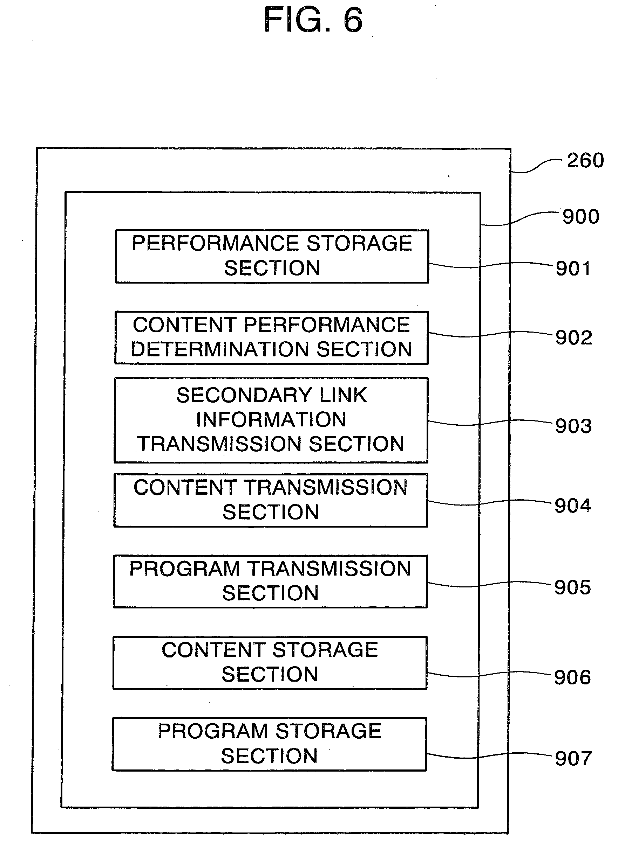

FIG. 6 is a diagram that illustrates the configuration of a data broadcasting program.

Here, a data broadcasting program 900 is stored in the CD-ROM 260, and includes a performance storage section 901, a content performance determination section 902, a secondary link information transmission section 903, a content transmission section 904, a program transmission section 905, a content storage section 906, and a program storage section 907. The execution of the data broadcasting program 900 by the CPU 60 illustrated in FIG. 3 implements the performance storage section 601, the content performance determination section 602, the secondary link information transmission section 603, the content transmission section 604, the program transmission section 605, the content storage section 606, and the program storage section 607 illustrated in FIG. 5.

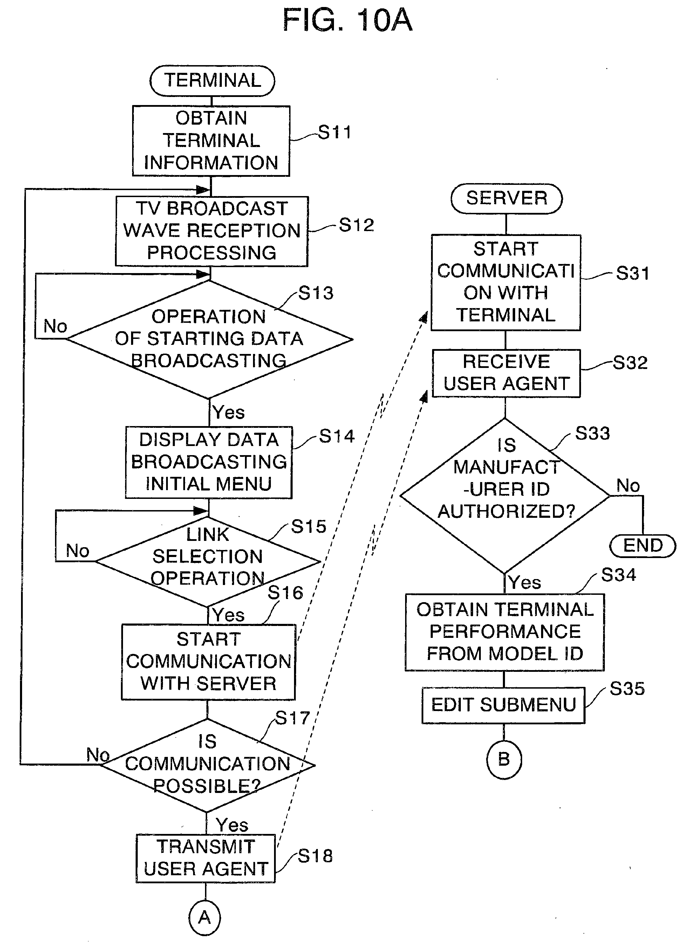

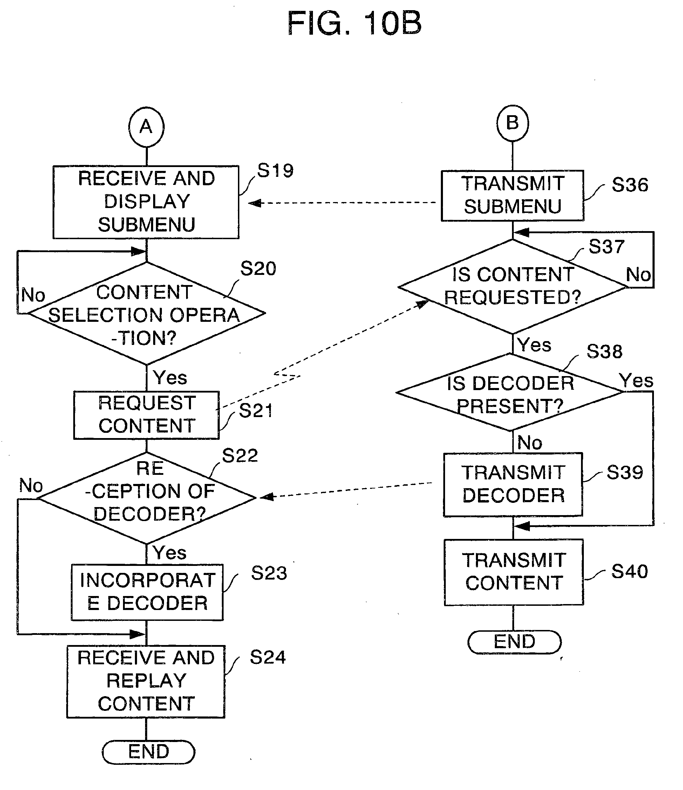

FIG. 10 is a flow chart that illustrates processing in the user device illustrated in FIG. 4 and the data broadcasting server illustrated in FIG. 5.

In the description of the processing, the user device 2 among the three user devices illustrated in FIG. 1 will be described as an example, and a case of the other user device 3 will also be described as necessary.

At first, acquisition of information on the user device 2 is executed in the user device 2 (step S11). In the acquisition of the information, the network connection section 203 reads the manufacturer ID, the model ID and the serial number that are pieces of information on the user device 2 from the ID storage section 205.

Next, TV broadcast wave reception processing is executed (step S12). In the TV broadcast wave reception processing, the broadcast receiving section 201 receives a broadcast wave from the broadcasting station 1 (see FIG. 1). Also, the display section 202 displays the content C1 of the broadcast wave received by the broadcast receiving section 201. Image data and the menu data M1 are included in the content C1, and the display section 202 decodes and displays the information on the image.

When the user operation section 204 receives operation of starting the data broadcasting by the user (step S13: Yes), the display section 202 displays the menu data M1 included in the content C1. Thus, as illustrated in FIG. 7, an ordinary TV program is displayed in the area P1 of the display screen 23a, and the buttons of the data broadcasting are displayed in the area P3.

Next, in response to the user operation section 204 receiving the link selection operation of selecting any of the displayed buttons (step S15: Yes), the network connection section 203 starts communicating with the server 6 (step S16). The server 6 also starts communicating with the user device 2 (step S31). Here, when the user device 2 may not communicate with the server 6 because of, for example, not being connected to the network 7 (step S17: No), the user device 2 may not receive the data broadcasting service and receives only the broadcast wave. On the other hand, when the communication with the server 6 is possible (step S17: Yes), the network connection section 203 transmits the user agent (step S18). To be more specific, the network connection section 203 transmits a transmission command (transmission request) to transmit the data indicated by the primary link information of the button selected by the link selection operation to the server 6, and the user agent is inserted into this transmission command. As illustrated in FIG. 8, the user agent includes the information of the manufacturer ID, the model ID and the receiver ID. The network connection section 203 inserts the manufacturer ID, the model ID and the serial number read from the ID storage section 205 in the above-described step S11 into the user agent, and sends the transmission command.

Upon receipt of the transmission command and the user agent included therein from the user device 2 (step S32), the content performance determination section 602 of the server 6 determines whether the manufacturer ID included in the user agent is being authorized (step S33). Here, authorized means that the user device is produced by a manufacturer registered in the correspondence information 601a and its content display performance may be recognized, and is provided for the purpose of distinguishing the user device from user devices whose performance is hard to recognize such as a self-made PC. Whether being authorized or not is determined based on whether the manufacturer ID included in the user agent is present in the correspondence information 601a stored in the performance storage section 601.

When determining that the manufacturer ID is being authorized (step S33: Yes), the content performance determination section 602 acquires the content display performance of the user device from the model ID (step S34). To be more specific, the content performance determination section 602 refers to the correspondence information 601a stored in the performance storage section 601, and thereby obtains the types of the CPU and the memory corresponding to the combination of the manufacturer ID and the model ID included in the user agent. Also, the content performance determination section 602 obtains information indicating whether the model corresponding to this combination of the manufacturer ID and the model ID has the decoder A and the decoder B. For example, when the user device 2 that has transmitted the user agent is a model "b" of the company A, the content performance determination section 602 determines that this user device 2 has a CPU of type IV and a memory of 256 Mbytes and has the decoder A installed thereon, based on the manufacturer ID and the model ID. Meanwhile, for example, when another user device 3 has sent the user agent and is the model "a" of the company A, it is determined that this user device 3 is equipped with a CPU of Type III and a memory of 128 Mbytes and has neither the decoder A nor the decoder B installed thereon.

Next, the secondary link information transmission section 603 edits the submenu data that is the data requested by the transmission request from the user device 2 (step S35), and transmits the data to the user device 2 (step S36). The submenu data is information indicated by the transmitted URL according to the transmission request, and stored in the content storage section 606. The submenu data is described in BML, and includes the secondary link information indicating the content that is the image data. Each piece of the secondary link information has, for example, item names of three contents; "morning news from 08:00 to 10:00" "lunchtime news from 12:00 to 13:00" and "evening news from 17:30 to 19:00", URLs indicating the contents, and display attributes of the items. Further, the submenu includes the performance of the user device required for the display and the information about the decoder, for each content indicated by the secondary link information. For example, among the above-mentioned three contents, the display of the morning news and the lunchtime news requires a CPU of type IV or more, a memory of 256 Mbytes or more, and the decoder B, while the display of the evening news requires a CPU of type III or more, a memory of 128 Mbytes or more, and the decoder A.

The secondary link information transmission section 603 transmits the submenu data M2 after adding information that indicates whether the content indicated by the secondary link information is a content that requires content display performance exceeding the content display performance of the user device. To be more specific, when the performance necessary for the display exceeds the content display performance of the user device acquired in the content performance determination section 602, the secondary link information transmission section 603 changes the display attribute of the item to a type different from other items, for each of the contents corresponding to the three items of the submenu. The display attribute is, for example, the "dark" attribute to make the display darker than other items. Also, the URL corresponding to this item is deleted and emptied.

For example, when the submenu of the above-mentioned news is transmitted to the user device 2 that is the model "b" of the company A, the content of any of the morning news, the lunchtime news and the evening news does not exceed the content display performance of the user device 2. Thus, the secondary link information transmission section 603 sets the display attribute as a normal attribute, and maintains the URL as the one indicating the content. Meanwhile, when the submenu is transmitted to the user device 3 that is the model "a" of the company A, the display attribute is set as the "dark" attribute and the URL is emptied for the morning news and the lunchtime news that are the contents exceeding the content display performance of the user device 3.

When the network connection section 203 receives the submenu edited in the secondary link information transmission section 603, the user device 2 displays the submenu (step S19).

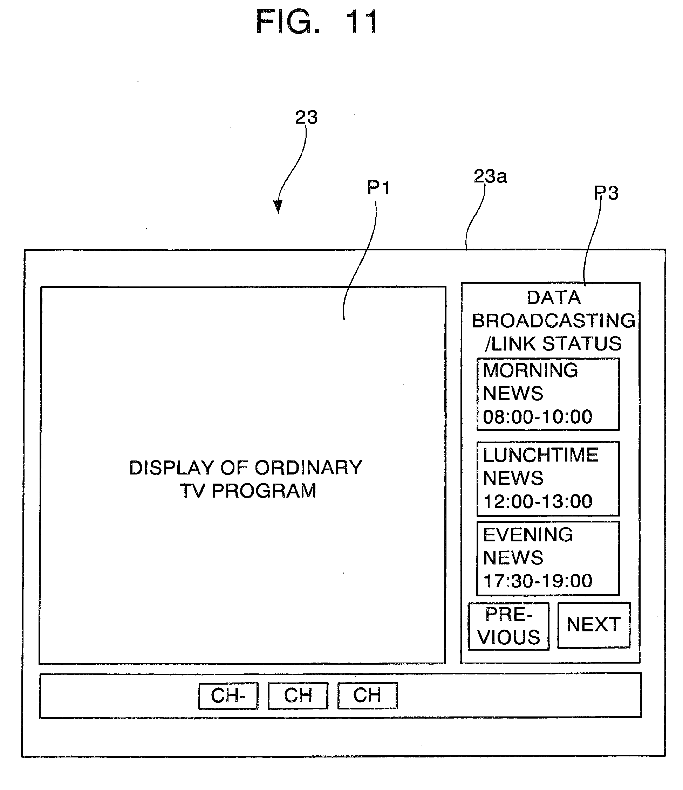

FIG. 11 is a diagram that illustrates a state in which the submenu is displayed in one user device.

In the upper left area P1 on the display screen 23a of the image display unit 23 in the user device 2, an image of the broadcast content received from the broadcasting station is displayed like the case of FIG. 7. In the upper right area P3 of the display screen 23a, the submenu data is displayed. The submenu data has plural pieces of secondary link information. Corresponding to the respective pieces of the secondary link information, three buttons of "morning news from 08:00 to 10:00" "lunchtime news from 12:00 to 13:00" and "evening news from 17:30 to 19:00" are displayed in a selectable manner.

When the user operation section 204 of the user device 2 receives operation of selecting an item by the user (step S20: Yes), the network connection section 203 requests the transmission of the content indicated by the secondary link corresponding to the item selected in the user operation section 204 (step S21). For example, when the button of the morning news in the area P3 illustrated in FIG. 11 is selected, the network connection section 203 requests the transmission of the content indicated by the URL corresponding to the morning news.

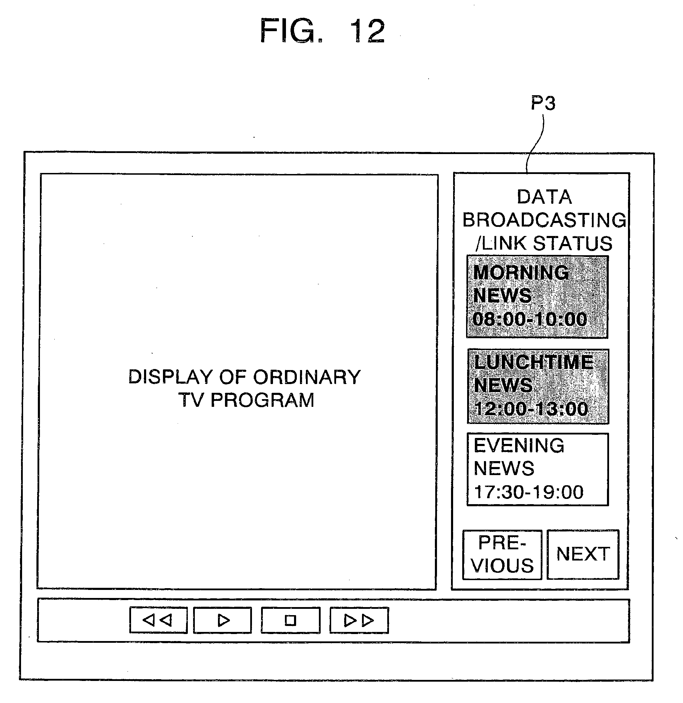

FIG. 12 is a diagram that illustrates a state in which the submenu received from the server is displayed on the display screen of the image display unit of the user device 3 that is the model different from that in FIG. 11.

In the area P3 in the user device 3, the submenu is displayed. The submenu data has plural pieces of secondary link information. Corresponding to the respective pieces of secondary link information, three buttons are displayed. However, the buttons of the morning news and the lunchtime news are distinguished from the remaining button and displayed darkly. Thus, in the user device 3, the morning news and the lunchtime news are displayed as not being selectable. Also, because the URLs corresponding to the morning news and the lunchtime news are set to be empty, even if their buttons are selected, the transmission of the content is not requested. In the user device 3, when the evening news is selected, the transmission of the content is requested. In this way, reception of the content that requires performance exceeding the content display performance of the user device 3 is avoided.

In the server 6, upon receipt of the request to transmit the content based on the URL from the user device 2 (step S37: Yes), the content performance determination section 602 refers to the information indicating whether the decoder A and the decoder B are possessed, in the content display performance of the user device acquired by referring to the correspondence information 601a in the above-described step S34, and determines whether the requested content requires the decoder absent in the user device (step S38). For example, if the transmission of the morning news is requested as the content from the user device 2, it is determined that this morning news requires the decoder B absent in the user device 2 that is the model "b" of the company A.

When it is determined by the content performance determination section 602 that the content requires the decoder absent in the user device(step S38: No), the program transmission section 605 reads the decoder required by the content from the program storage section 607 and transmits the decoder to the user device 2 (step S39). On the other hand, when it is determined by the content performance determination section 602 that the decoder required by the content is present in the user device (step S38: Yes), the decoder is not transmitted. Subsequently, the content transmission section 604 reads the requested content from the content storage section 606, and transmits the content to the user device 2 (step S40).

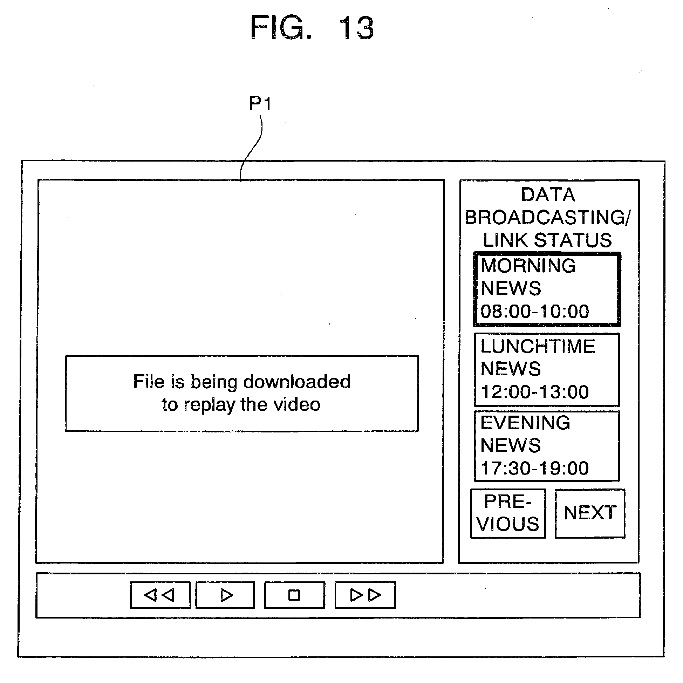

FIG. 13 is a diagram that illustrates a state in which a message saying that the decoder is being transmitted from the server is displayed on the display screen of the user device.

In the user device 2, when the network connection section 203 receives the decoder from the server 6 (step S22: Yes), the decoder is incorporated (step S23). Subsequently, the network connection section 203 receives the content, and the display section 202 displays the content (step S24). When the decoder received from the server 6 is incorporated, the display section decodes the received content by using the incorporated decoder.

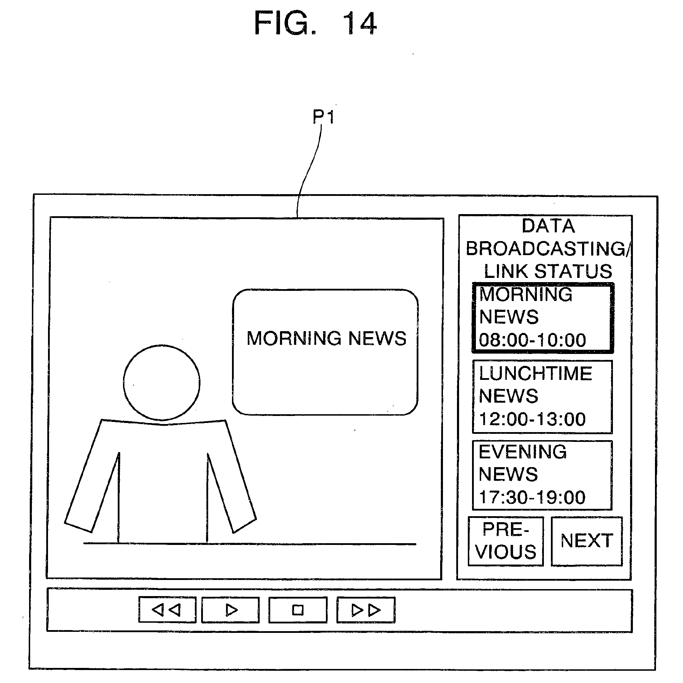

FIG. 14 is a diagram that illustrates a state in which the content that has been transmitted from the server is displayed on the display screen of the user device.

In the upper left area P1 on the display screen 23a of the user device 2, the content received from the server 6 is displayed.

In this way, information is provided according to the operation of the user.

According to the data broadcasting system S described above, the user devices 2, 3 and 4 may avoid the reception of the content exceeding the own content display performance by transmitting the model information possessed by the user devices 2, 3 and 4. Further, when the user device does not have the decoder necessary for the processing of the content, the decoder is transmitted from the server prior to the content. Furthermore, because the user agent that is already used in the data broadcasting may be utilized in the transmission of the model information, the data broadcasting system in the existing one-segment broadcasting may be utilized by only changing the processing of the server without adding special hardware.

Incidentally, in the above description of each specific embodiment, the one server 6 is taken as an example of the data broadcasting server in the basic aspect described in "Disclosure of the Invention", but this data broadcasting server is not limited to one and may be more than one. Further, the data broadcasting server may be anything as long as it transmits the secondary link information, and may be a server that does not transmit the content.

Furthermore, in the above description of each specific embodiment, the case of the personal computer is taken as an example of the user device in the basic aspect described in "Disclosure of the Invention", but this user device may be a portable telephone, information user device equipment, and a television receiver, other than the personal computer.

Moreover, in the above description of each specific embodiment, the example in which the display attribute is the "dark" attribute is taken as "information added by the second link transmission" in the basic aspect described in "Disclosure of the Invention" and the example in which the URL is emptied. However, this added information may be anything as long as it prevents the transmission of the request based on the secondary link information, and may be, for example, information indicating the lock of the transmission request, and may be added as an attribute that does not appear in the display.

Further, in the above description of each specific embodiment, the type of CPU and the capacity of memory are taken as an example of the content display performance in the basic form described in "Disclosure of the Invention", but this content display performance may be the presence or absence of a clock speed or an accelerator, or may be an index value of the performance such as a benchmark.

Furthermore, in the above description of each specific embodiment, the Internet is taken as an example of the network in the basic form described in "Disclosure of the Invention", but this network may be a LAN (local area network) or may be a WAN (wide area network).

Moreover, in the above description of each specific embodiment, the correspondence information in tabular form is taken as an example of the correspondence information in the basic form described in "Disclosure of the Invention", but this correspondence information may be in other form.

In addition, in the above description of each specific embodiment, the data broadcasting program stored in the CD-ROM 260 is presented as the data broadcasting program in the basic form described in "Disclosure of the Invention". However, the medium that stores this data broadcasting program may be of any type as long as it is capable of storing a program without requiring a specific type, and may be, for example, a magnetic disk of a hard disk drive, or may be a flexible disc, an MO disk or DVD, or may be a card type or tape type storage medium. Moreover, this data broadcasting program is not limited to the one stored in a storage medium, and may be, for example, communicated in a communication line.

## Claims

1. A data broadcasting server (6)
adapted for a data broadcasting system comprising a broadcasting station (1), the data broadcasting server (6), and a user device (2, 3, 4) connected to the data broadcasting server (6) by a network (7) and operable to receive a broadcast from the broadcasting station (1) wherein primary link information (L1) is included in a content (C1) received by the user device from the broadcasting station (1),
wherein the data broadcasting server (6) is configured to transmit via the network (7) secondary link information (L2) to the user device (2, 3, 4) in response to designation of primary link information in a request of the user device to the data broadcasting server (6) to transmit the secondary link information indicated by the designated primary link information, accompanied by model information of the user device,
the data broadcasting server (6) comprising:
a performance storage section (601) that stores correspondence information (601a) in which the model information and a content display performance of a model included in the model information are associated with each other, the correspondence information (601a) including the presence or absence of a decoder necessary for displaying a particular content (C2) in the content display performance of the user device;
a content performance determination section (602) that
refers to the correspondence information upon receipt of the request to transmit sent from the user device (2, 3, 4) to transmit the secondary link information including the model information of the user device,
obtains content display performance of the user device, and
determines whether the content (C2) indicated by the secondary link information requested by the request to transmit from the user device (2, 3, 4) exceeds the content display performance of the user device and whether that content is a content requiring a decoder absent in the user device; and
a secondary link information transmission section that
adds, to the secondary link information requested by the request to transmit from the user device (2, 3, 4), information indicating whether that content exceeds the content display performance of the user device, and transmits the secondary link information to the user device,
wherein:
when it is determined by the content performance determination section (602) that the content (C2) is the content requiring the decoder absent in the user device, the data broadcasting server transmits via the network (7) the decoder to the user device.

2. A data broadcasting system comprising:
a data broadcasting server (6) according to claim 1;
a broadcasting station (1);
a network (7); and
a user device (2, 3, 4) that comprises:
a broadcast receiving section that receives a broadcast from the broadcasting station (1);
a display section (23) that displays a content (C1) which is received from the broadcasting station and which includes primary link information (L1) indicating secondary link information (L2) indicating other content (C2) on the network;
a user operation section that designates the primary link information of the content (C1) displayed in the display section (23), according to a user's operation; and
a network connection section (203) that is connected to the network, receives and transmits information via the network, and requests, in response to the primary link information being designated by the user operation section, to transmit the secondary link information indicated by the designated primary link information, accompanied by the user device's (2, 3, 4) own model information.

3. The data broadcasting system according to claim 2, wherein
the network connection section further receives the secondary link information transmitted from the data broadcasting server,
the display section (23) displays the secondary link information in response to reception of the secondary link information, and
the user operation section designates the secondary link information displayed in the display section according to the user's operation,
the network connection section (203) requests, in response to the secondary link information being designated by the user operation section, to transmit the content indicated by the designated secondary link information,
the data broadcasting server (6) further comprises a content transmission section (604) that transmits the content requested by the network connection section (203),
and
the display section (23) displays the content transmitted from the content transmission section (604).

4. A data broadcasting program configured to cause a computer to function as a data broadcasting server (6) according to claim 1.

## Patentansprüche

1. Datenausstrahlungsserver (6),
ausgelegt für ein Datenausstrahlungssystem, das eine Ausstrahlungsstation (1), den Datenausstrahlungsserver (6) und eine Anwendervorrichtung (2, 3, 4) enthält, die mit dem Datenausstrahlungsserver (6) durch ein Netzwerk (7) verbunden ist und betreibbar ist, um eine Ausstrahlung von der Ausstrahlungsstation (1) zu empfangen, wobei primäre Verbindungsinformationen (L1) in einem Inhalt (C1) enthalten ist, den die Empfängervorrichtung von der Ausstrahlungsstation (1) empfangen hat,
wobei der Datenausstrahlungsserver (6) konfiguriert ist, um über das Netzwerk (7) sekundäre Verbindungsinformationen (L2) zu der Anwendervorrichtung (2, 3, 4) in Abhängigkeit von der Bestimmung von primären Verbindungsinformationen in einer Anforderung der Anwendervorrichtung an den Datenausstrahlungsserver (6) zu übertragen, um die sekundären Verbindungsinformationen, die von den bestimmten primären Verbindungsinformationen angegeben wurden, begleitet von Modellinformationen der Anwendervorrichtung zu übertragen,
wobei der Datenausstrahlungsserver (6) enthält:
eine Leistungsspeichersektion (601), die Entsprechungsinformationen (601a) speichert, in denen die Modellinformationen und eine Inhaltsanzeigenleistung eines Modells, das in den Modellinformationen enthalten ist, miteinander verbunden werden, wobei die Entsprechungsinformationen (601a) das Vorhandensein oder die Abwesenheit eines Decodierers enthält, der zum Anzeigen eines speziellen Inhalts (C2) erforderlich ist, in der Inhaltsanzeigenleistung der Anwendervorrichtung;
eine Inhaltsleistungsbestimmungssektion (602), die
Bezug nimmt auf die Entsprechungsinformationen nach Empfang der Anforderung zur Übertragungssendung von der Anwendervorrichtung (2, 3, 4), um die sekundären Verbindungsinformationen zu übertragen, die die Modellinformationen der Anwendervorrichtung enthalten,
Inhaltsanzeigenleistung der Anwendervorrichtung erhält, und
bestimmt, ob der Inhalt (C2), der von den sekundären Verbindungsinformationen angegeben wurde, die von der Anforderung zum Übertragen der Anwendervorrichtung (2, 3, 4) angefordert wurden, die Inhaltsanzeigenleistung der Anwendervorrichtung übersteigt und ob jener Inhalt ein Inhalt ist, der einen Decodierer benötigt, der in der Anwendervorrichtung nicht vorhanden ist; und
eine Sekundärverbindungsinformationen-Übertragungssektion, die
zu den Sekundärverbindungsinformationen, die von der Anforderung zum Übertragen von der Anwendervorrichtung (2, 3, 4) angefordert wurden, Informationen hinzufügt, die angeben, ob jener Inhalt die Inhaltsanzeigenleistung der Anwendervorrichtung übersteigt, und die Sekundärverbindungsinformationen zu der Anwendervorrichtung überträgt,
wobei:
wenn von der Inhaltsleistungsbestimmungssektion (602) bestimmt wurde, dass der Inhalt (C2) der Inhalt ist, der den Decodierer benötigt, der in der Anwendervorrichtung nicht vorhanden ist, der Datenausstrahlungsserver über das Netzwerk (7) den Decodierer zu der Anwendervorrichtung überträgt.

2. Datenausstrahlungssystem, enthaltend:
einen Datenausstrahlungsserver (6) nach Anspruch 1;
eine Ausstrahlungsstation (1);
ein Netzwerk (7); und
eine Anwendervorrichtung (2, 3, 4), die enthält:
eine Ausstrahlungsempfangssektion, die eine Ausstrahlung von der Ausstrahlungsstation (1) empfängt;
eine Anzeigesektion (23), die einen Inhalt (C1) anzeigt, der von der Ausstrahlungsstation empfangen wurde und der primäre Verbindungsinformationen (L1) enthält, die sekundäre Verbindungsinformationen (L2) angeben, die anderen Inhalt (C2) auf dem Netzwerk angeben;
eine Anwenderbedienungssektion, die die primären Verbindungsinformationen des Inhalts (C1), der in der Anzeigesektion (23) angezeigt wird, gemäß der Anwenderbedienung bestimmt; und
eine Netzwerkverbindungssektion (203), die mit dem Netzwerk verbunden ist, Informationen über das Netzwerk empfängt und überträgt, und in Abhängigkeit von den primären Verbindungsinformationen, die von der Anwenderbedienungssektion bestimmt wurden, anfordert, die sekundären Verbindungsinformationen, die von den bestimmten primären Verbindungsinformationen angegeben wurden, begleitet von den eigenen Modellinformationen der Anwendervorrichtung (2, 3, 4) zu übertragen.

3. Datenausstrahlungssystem nach Anspruch 2, wobei:
die Netzwerkverbindungssektion ferner die sekundären Verbindungsinformationen empfängt, die von dem Datenausstrahlungsserver übertragen wurden,
die Anzeigesektion (23) die sekundären Verbindungsinformationen in Abhängigkeit vom Empfang der sekundären Verbindungsinformationen anzeigt, und
die Anwenderbedienungssektion die sekundären Verbindungsin-formationen bestimmt, die in der Anzeigesektion angezeigt werden, gemäß der Anwenderbedienung,
die Netzwerkverbindungssektion (203), die in Abhängigkeit von den sekundären Verbindungsinformationen, die von der Anwenderbedienungssektion bestimmt wurden, anfordert, den Inhalt zu übertragen, der von dem bestimmten sekundären Verbindungsinformationen angegeben wurde,
der Datenausstrahlungsserver (6) ferner eine Inhaltsübertragungssektion (604) enthält, die den Inhalt überträgt, der der von der Netzwerkverbindungssektion (203) angefordert wurde, und
die Anzeigesektion (23) den Inhalt anzeigt, der von der Inhaltsübertragungssektion (604) übertragen wurde.

4. Datenausstrahlungsprogramm, das konfiguriert ist, um einen Computer zu veranlassen als ein Datenausstrahlungsserver (6) nach Anspruch 1 nach Anspruch 1 zu funktionieren.

## Revendications

1. Serveur de diffusion de données (6)
conçu pour un système de diffusion de données comprenant une station de diffusion (1), le serveur de diffusion de données (6), et un dispositif utilisateur (2, 3, 4) connecté au serveur de diffusion de données (6) par un réseau (7) et utilisable pour recevoir une diffusion depuis la station de diffusion (1) où des informations de liaison primaire (L1) sont comprises dans un contenu (C1) reçu par le dispositif utilisateur depuis la station de diffusion (1),
où le serveur de diffusion de données (6) est configuré pour transmettre via le réseau (7) des informations de liaison secondaire (L2) au dispositif utilisateur (2, 3, 4) en réponse à une désignation d'informations de liaison primaire dans une demande du dispositif utilisateur au serveur de diffusion de données (6) pour transmettre les informations de liaison secondaire indiquées par les informations de liaison primaire désignées, accompagnées par des informations de modèle du dispositif utilisateur,
le serveur de diffusion de données (6) comprenant :
une section de stockage de performances (601) qui stocke des informations de correspondance (601a) dans lesquelles les informations de modèle et une performance d'affichage de contenu d'un modèle compris dans les informations de modèle sont associées les unes aux autres, les informations de correspondance (601a) comprenant la présence ou l'absence d'un décodeur nécessaire pour afficher un contenu particulier (C2) dans la performance d'affichage de contenu du dispositif utilisateur ;
une section de détermination de performances de contenu (602) qui :
se réfère aux informations de correspondance à réception de la demande de transmission envoyée depuis le dispositif utilisateur (2, 3, 4) pour transmettre les informations de liaison secondaire comprenant les informations de modèle du dispositif utilisateur,
obtient une performance d'affichage de contenu du dispositif utilisateur, et
détermine si le contenu (C2), indiqué par les informations de liaison secondaire demandées par la demande de transmission depuis le dispositif utilisateur (2, 3, 4), dépasse la performance d'affichage de contenu du dispositif utilisateur et si ce contenu est un contenu nécessitant un décodeur absent dans le dispositif utilisateur ; et
une section de transmission d'informations de liaison secondaire qui :
ajoute, aux informations de liaison secondaire demandées par la demande de transmission depuis le dispositif utilisateur (2, 3, 4), des informations indiquant si ce contenu dépasse la performance d'affichage de contenu du dispositif utilisateur, et transmet les informations de liaison secondaire au dispositif utilisateur,
où :
lorsqu'il est déterminé par la section de détermination de performance de contenu (602) que le contenu (C2) est le contenu nécessitant le décodeur absent dans le dispositif utilisateur, le serveur de diffusion de données transmet, via le réseau (7), le décodeur au dispositif utilisateur.

2. Système de diffusion de données comprenant :
un serveur de diffusion de données (6) selon la revendication 1 ;
une station de diffusion (1) ;
un réseau (7) ; et
un dispositif utilisateur (2, 3, 4) qui comprend :
une section de réception de diffusion qui reçoit une diffusion depuis la station de diffusion (1) ;
une section d'affichage (23) qui affiche un contenu (C1) qui est reçu depuis la station de diffusion et qui comprend des informations de liaison primaire (L1) indiquant des informations de liaison secondaire (L2) indiquant un autre contenu (C2) sur le réseau ;
une section d'opération d'utilisateur qui désigne les informations de liaison primaire du contenu (C1) affichées dans la section d'affichage (23), conformément à une opération d'utilisateur ; et
une section de connexion de réseau (203) qui est connectée au réseau, reçoit et transmet des informations via le réseau, et demande, en réponse aux informations de liaison primaire désignées par la section d'opération d'utilisateur, de transmettre les informations de liaison secondaire indiquées par les informations de liaison primaire désignées, accompagnées par les informations de modèle propres au dispositif d'utilisateur (2, 3, 4).

3. Système de diffusion de données selon la revendication 2, dans lequel :
la section de connexion de réseau reçoit en outre les informations de liaison secondaire transmises depuis le serveur de diffusion de données,
la section d'affichage (23) affiche les informations de liaison secondaire en réponse à une réception des informations de liaison secondaire, et
la section d'opération d'utilisateur désigne les informations de liaison secondaire affichées dans la section d'affichage conformément à l'opération d'utilisateur,
la section de connexion de réseau (203) demande, en réponse aux informations de liaison secondaire désignées par la section d'opération d'utilisateur, de transmettre le contenu indiqué par les informations de liaison secondaire désignées,
le serveur de diffusion de données (6) comprend en outre une section de transmission de contenu (604) qui transmet le contenu demandé par la section de connexion de réseau (203) et
la section d'affichage (23) affiche le contenu transmis depuis la section de transmission de contenu (604).

4. Programme de diffusion de données configuré pour amener un ordinateur à fonctionner comme serveur de diffusion de données (6) selon la revendication 1.
